# EUROPÄISCHE PATENTSCHRIFT

(11) **EP 3 977 238 B1**
(45) Veröffentlichungstag und Bekanntmachung des Hinweises auf die Patenterteilung: **06.12.2023**
(21) Anmeldenummer: 19728367.4
(22) Anmeldetag: 28.05.2019
(51) Int. Cl.: G06F 3/01

(54) **TRAGBARE MENSCH-MASCHINE SCHNITTSTELLE UND MIT DIESER AUSFÜHRBARES VERFAHREN**
WEARABLE HUMAN-MACHINE INTERFACE AND METHOD WHICH CAN BE CARRIED OUT USING SAME
INTERFACE HOMME-MACHINE PORTABLE ET PROCÉDÉ POUVANT ÊTRE MIS EN OEUVRE AVEC CELLE-CI

(43) Veröffentlichungstag der Anmeldung: 06.04.2022
(73) Patentinhaber: Humain Solutions UG (Haftungsbeschränkt), 18516 Süderholz (DE)
(72) Erfinder: GEIER, Andreas, Tokyo 151-0063 (JP); SATHE, Prathamesh Prasad, Tokyo 134-0087 (JP); TUCKER, Rawleigh Cosmo Young, Tokyo 179-0073 (JP)
(74) Vertreter: Beyer, Andreas
(86) Internationale Anmeldenummer: PCT/EP2019/063795
(87) Internationale Veröffentlichungsnummer: WO 2020/239202

(56) Entgegenhaltungen:
- WO-A1-2019/074950
- US-A1- 2010 179 440
- US-A1- 2019 029 584
- US-A1- 2019 107 887

## Beschreibung

Die vorliegende Erfindung betrifft eine neuartige Mensch-Maschine Schnittstelle sowie ein Verfahren, welches mit einer solchen Mensch-Maschine Schnittstelle ausgeführt werden kann.

Aufgrund der zunehmenden Vernetzung und Digitalisierung der Umwelt, in der Menschen und Tiere heutzutage leben, ist es immer häufiger notwendig, dass eine Kommunikation zwischen einem Menschen (oder auch einem Tier) und elektronischen Geräten aller Art stattfindet. Als Stichwort sei hier der Begriff des Internet of Things (IoT) genannt, worunter allgemein verstanden wird, dass über das Internet eine Verbindung zu einer Vielzahl von Geräten möglich ist oder in Zukunft sein wird, die eine Bedienung bzw. Steuerung dieser Geräte durch Benutzer ermöglicht. Ohne jeglichen Anspruch auf Vollständigkeit seien als Beispiele für solche Geräte genannt Fahrzeuge aller Art, Haushaltsgeräte, Gebäudeheizungen, Fitnesstrainer, Spielgeräte, Drohnen, Roboter und vieles andere mehr. Zur Bedienung bzw. Steuerung solcher und anderer Geräte werden intelligente Mensch-Maschine Schnittstellen benötigt, die einem Menschen (oder Tier) eine möglichst einfache und intuitive Nutzung solcher Geräte ermöglichen.

Der vorliegenden Erfindung liegt die Aufgabe zugrunde, eine solche tragbare Mensch-Maschine Schnittstelle bereitzustellen.

Aus der US 2010/0179440 A1 ist ein nichtinvasiver medizinischer Pulsmesser bekannt, der als Sensor ein Hall-Effekt-Bauelement verwendet. Mittels dieses Sensors werden durch einen Pulsschlag verursachte Verformungen einer Hautoberfläche in eine Pulsmessung umgesetzt.

Aus der WO 2019/074950 A1 ist allgemein bekannt, dass Permanentmagneten an einem Körper angebracht werden können und dass mittels dieser Magnete Gelenkbewegungen verfolgt werden können.

Aus der US 2019/0029584 A1 ist bekannt, dass auf der Basis festgestellter Gesundheitsdaten beispielsweise ein Pflegedienst benachrichtigt werden kann.

Aus der US 2019/0107887 A1 ist ein Drucksensorarray bekannt, das beispielsweise in ein Armband eingebettet sein kann und mittels des Armbandes an einem Körperteil eines Benutzers befestigt werden kann. Das Drucksensorarray steht mit der Hautoberfläche in Kontakt und erzeugt basierend auf subdermalen Drücken, die von Sehnen, Bändern, der Haut, Muskeln und Knochen eines Benutzers ausgeübt werden, ein spezifisches Druckprofil, welches mittels einer zugeordneten Verarbeitungseinheit in eine Bewegung des Unterarms, der Hand, des Handgelenks, der Finger zugeordnet werden kann. Körperbewegungen können auf diese Weise erkannt und mit Gesten korreliert werden, wobei eine Geste einem Befehl oder einer Steuerfunktion zugeordnet werden kann, die ein Gerät ausführen soll.

Zur Lösung der genannten Aufgabe wird eine tragbare Mensch-Maschine Schnittstelle mit den im Anspruch 1 genannten Merkmalen und ein Verfahren gemäß Anspruch 8 vorgeschlagen. Die Mensch-Maschine Schnittstelle weist ein Tragelement auf, welches zur Anbringung an einem Hautareal eines menschlichen oder tierischen Körpers ausgebildet ist. Als Tragelement kann jedes Element dienen, welches dazu geeignet ist, die Mensch-Maschine Schnittstelle an dem gewünschten Hautareal eines menschlichen oder tierischen Körpers vorzugsweise lösbar zu befestigen. Die erfindungsgemäße Mensch-Maschine Schnittstelle weist ferner eine flexible Schicht mit magnetischen Eigenschaften auf, die an dem Tragelement auf einer dem Hautareal des menschlichen oder tierischen Körpers zugewandten Seite zum Inkontaktkommen mit der Oberfläche des Hautareals angebracht ist. Die Flexibilität der Schicht mit magnetischen Eigenschaften muss dabei solchermaßen sein, dass die Schicht Verformungen der Oberfläche des Hautareals zumindest im Wesentlichen folgen kann. Unter "magnetischen Eigenschaften" wird im Rahmen der vorliegenden Erfindung verstanden, dass die magnetischen Eigenschaften der Schicht derart ausgebildet sind, dass von der flexiblen Schicht ein Magnetfeld erzeugt wird, und eine Verformung der Oberfläche des Hautareals, welcher die flexible Schicht mit magnetischen Eigenschaften folgt, zu einer messbaren Änderung der magnetischen Feldstärke und/oder einer messbaren Änderung der magnetischen Flussdichte des erzeugten Magnetfeldes führt. Ferner umfasst die erfindungsgemäße Mensch-Maschine Schnittstelle eine an dem Tragelement angebrachte Erfassungseinheit, die die Änderung der magnetischen Feldstärke und/oder die Änderung der magnetischen Flussdichte misst. Mit anderen Worten, die Erfassungseinheit ist dazu ausgestaltet, jedenfalls diejenigen Änderungen der magnetischen Eigenschaften der flexiblen Schicht zu messen, die bezüglich eines Ausgangszustandes durch eine Verformung der Oberfläche des Hautareals hervorgerufen werden. Schließlich umfasst die erfindungsgemäße Mensch-Maschine Schnittstelle eine Verarbeitungseinheit, die dazu eingerichtet ist, einen Algorithmus auszuführen, der die gemessene Änderung der magnetischen Feldstärke und/oder die gemessene Änderung der magnetischen Flussdichte einer Konfiguration und/oder Bewegung und/oder einer Kraft, mit der die Bewegung ausgeführt wird, zuordnet.

Die Verformung der Oberfläche eines Hautareals kann willkürliche oder unwillkürliche Ursachen haben. Beispielsweise kann ein Mensch seine Extremitäten willkürlich in eine andere Position bringen, die entsprechende Verformungen bestimmter Hautareale nach sich zieht. Andererseits kann es beispielsweise aufgrund einer Krankheit eines Menschen zu unwillkürlichen Verformungen bestimmter Hautareale kommen (etwa durch unwillkürliche Muskelkontraktionen oder Organbewegungen), deren Erfassung und Zuordnung einem Arzt ermöglichen kann, eine bessere Diagnose zu stellen.

Unter dem Begriff "Konfiguration" wird im Rahmen der vorliegenden Erfindung die Gesamtheit der für die zur Beschreibung der Freiheitsgrade der jeweiligen Extremität notwendigen Gelenkwinkel verstanden. Anders ausgedrückt handelt es sich bei einer "Konfiguration" um eine bestimmte Stellung einer menschlichen oder tierischen Extremität (als Beispiele seien hier genannt: Bein gestreckt, Bein abgewinkelt, Hand geöffnet, Hand geschlossen, Arm gerade, Arm abgewinkelt, Hand gegenüber Ellbogen verdreht oder nicht verdreht etc.). Selbstverständlich kann eine Konfiguration auch einen Zustand zwischen zwei Endkonfigurationen angeben, etwa Arm teilweise gestreckt, Hand teilweise geschlossen etc.

Unter dem Begriff "Bewegung" wird im Rahmen der vorliegenden Erfindung eine zeitliche Änderung (insbesondere hinsichtlich Ausmaß und Geschwindigkeit) einer Konfiguration verstanden.

Unter dem Begriff "Intensität der Bewegung" wird im Rahmen der vorliegenden Erfindung die Kraft verstanden, mit der eine Bewegung ausgeführt wird.

Allgemein gesprochen kommt es bei einem menschlichen oder tierischen Körper durch willkürliche oder unwillkürliche Muskel-, Sehnen-, Band-, Knochen- und/oder Organbewegungen zu einer Verformung der Oberfläche von Hautarealen. Solche Verformungen zu erfassen und zuverlässig bestimmten Zuständen (Konfigurationen) und/oder Bewegungen sowie, falls gewünscht, deren Intensität zuzuordnen ist ein Ziel der vorliegenden Erfindung.

Die oben erwähnte, zur Mensch-Maschine Schnittstelle gehörende Verarbeitungseinheit kann integriert oder ausgelagert sein. Mit "integriert" ist hier gemeint, dass die Verarbeitungseinheit sich unmittelbar an der tragbaren Mensch-Maschine Schnittstelle befindet. Jedoch kann diese Verarbeitungseinheit sich auch entfernt von der tragbaren Mensch-Maschine Schnittstelle angeordnet befinden und beispielsweise über eine kabelgebundene oder drahtlose Verbindung mit der tragbaren Mensch-Maschine Schnittstelle kommunizieren.

Die flexible Schicht mit magnetischen Eigenschaften kann unterschiedliche Ausgestaltungen annehmen. Wichtig ist jedoch eine ausreichende Konformität mit der Oberfläche des interessierenden Hautareals, damit auftretende Verformungen der Hautoberfläche und die damit einhergehenden Verformungen der flexiblen Schicht zu messbaren Änderungen der magnetischen Eigenschaften führen. Genauer gesagt werden Änderungen der magnetischen Feldstärke und/oder Änderungen der magnetischen Flussdichte gemessen. Anders ausgedrückt wird das sich jeweils ergebende Magnetfeld gemessen, wobei sich ein vorhandenes Magnetfeld nicht zwangsläufig selbst ändern muss, sondern sich lediglich aus Sicht der Erfassungseinheit nach einer Hautverformung als ein anderes Magnetfeld darzustellen braucht. Vorteilhaft ist es in diesem Zusammenhang, wenn die flexible Schicht eine Polkonfiguration mit vielen Nord-Südpol-Paaren beinhaltet. Auf diese Weise erlaubt eine Verschiebung oder Verdrehung der flexiblen Schicht mit magnetischen Eigenschaften eine von außen messbare Magnetisierung durch Messung des Magnetfeldes. Maßgeblich ist dabei die Polkonfiguration mit der Stärke der jeweiligen Magnetisierung, so dass Änderungen der magnetischen Flussdichte und/oder magnetischen Feldstärke durch Magnetometer messbar sind.

Gemäß einer bevorzugten Ausführungsform der erfindungsgemäßen Mensch-Maschine Schnittstelle enthält die flexible Schicht eine Mehrzahl Magnete, die vorzugsweise in Form eines Arrays angeordnet sind, wobei wie bereits ausgeführt die messbare Änderung der magnetischen Eigenschaften der flexiblen Schicht als messbare Änderungen der magnetischen Feldstärke und/oder messbare Änderungen der magnetischen Flussdichte zu verstehen sind. Unter dem Begriff "Magnet" wird hier ein einzelner Permanentmagnet verstanden, aber auch ein stromdurchflossener Leiter oder ein magnetisierbares Partikel bzw. eine Gruppe magnetisierbarer Partikel (die z. B. in einem Magnetband oder einem Magnetstreifen angeordnet sein können). Wichtig ist lediglich, dass jeder "Magnet" zu einer nach außen wirksamen Magnetisierung führt, die mit der Erfassungseinheit erfasst werden kann. Eine flexible Schicht mit magnetischen Eigenschaften und einer vorteilhaften Polkonfiguration kann beispielsweise durch das Einlassen handelsüblicher Permanentmagnete mit einfacher Nord-Südpol-Konfiguration in eine bandartige, elastische Silikonschicht realisiert werden. Selbstverständlich sind viele andere Anordnungen denkbar und ebenfalls geeignet.

Keineswegs muss die flexible Schicht mit magnetischen Eigenschaften separat von dem Tragelement vorhanden sein. Bei vorteilhaften Ausführungsformen der erfindungsgemäßen Mensch-Maschine Schnittstelle bietet es sich vielmehr an, das Tragelement und die flexible Schicht mit magnetischen Eigenschaften in einem Bauteil zu kombinieren. Ein solches beide Elemente kombinierendes Bauteil kann beispielsweise die Gestalt eines Armbandes haben, wie es auch für Armbanduhren verwendet wird.

Die Erfassungseinheit der erfindungsgemäßen Mensch-Maschine Schnittstelle enthält vorzugsweise mehrere Magnetometer zum Messen der Änderungen der magnetischen Eigenschaften der flexiblen Schicht. Die mehreren Magnetometer sind vorteilhaft ebenfalls in Form eines Arrays angeordnet, wobei dieses Array nicht mit dem Array übereinstimmen muss, in dem die Mehrzahl Magnete angeordnet sind. Auch braucht die Anzahl Magnetometer nicht mit der Anzahl der Magnete übereinzustimmen, die die flexible Schicht aufweist.

Ergänzend zur Messung der Änderung der magnetischen Eigenschaften der flexiblen Schicht kann es vorteilhaft sein, noch weitere Informationen zu erfassen, die sich während einer Verformung der Oberfläche eines interessierenden Hautareals ergeben. Aus diesem Grund sind an bevorzugten Ausführungsformen erfindungsgemäßer Mensch-Maschine Schnittstellen ferner ein oder mehrere Beschleunigungssensoren und/oder Drehratensensoren vorhanden, deren Ausgangssignale ebenfalls der Verarbeitungseinheit zugeführt werden können.

Basierend auf den erfassten Änderungen der magnetischen Eigenschaften der flexiblen Schicht, zu denen es aufgrund einer Verformung der Oberfläche eines interessierenden Hautareals gekommen ist, führt die Verarbeitungseinheit einen Zuordnungsalgorithmus aus, der die gemessene Änderung (oder die gemessenen Änderungen) der magnetischen Eigenschaften einer Konfiguration und/oder einer Bewegung und/oder einer Intensität der Bewegung zuordnet. Anhand der zugeordneten Konfiguration und/oder Bewegung und/oder deren Intensität kann die Verarbeitungseinheit oder eine nachgelagerte Steuereinheit dann beispielsweise einen Steuerbefehl erzeugen, der einem Gerät zugeführt wird, welches daraufhin eine dem Steuerbefehl entsprechende Aktion ausführt. Somit entspricht die von dem Gerät ausgeführte Aktion der zumindest einen von der Verarbeitungseinheit bzw. dem Zuordnungsalgorithmus zugeordneten Konfiguration und/oder Bewegung und/oder deren Intensität. Bei der zugeordneten Konfiguration und/oder Bewegung und/oder deren Intensität kann es sich beispielsweise um eine Geste handeln.

Die Zuordnung der von der Erfassungseinheit beispielsweise mittels Magnetometermessungen erfassten Änderung der magnetischen Eigenschaften der flexiblen Schicht zu beispielsweise einer Konfiguration einer menschlichen Extremität lässt sich vorteilhaft unter Zuhilfenahme künstlicher Intelligenz erreichen. Die Verarbeitungseinheit einer erfindungsgemäßen Mensch-Maschine Schnittstelle ist deshalb dazu eingerichtet, die gemessene Änderung der magnetischen Eigenschaften der flexiblen Schicht unter Zuhilfenahme von Bayes-Klassifikatoren, eines künstlichen neuronalen Netzes, einer Support Vector Machine, einer Finite State Machine, eines Hidden Markov Modells, einer Relevance Vector Machine, eines Dynamic Time Warping Verfahrens, eines Conditional Random Field Verfahrens, eines Entscheidungsbaums, eines Random Forest Verfahrens, eines k-nearest Neighbors Algorithmus, einer Diskriminanzanalyse, einer linearen Regression, einer logistischen Regression, eines Gauß-Prozesses, eines Perceptrons und/oder von Ensemble-Methoden (Bayes Optimal Classifier, Bagging, Boosting) einer Konfiguration und/oder Bewegung und/oder deren Intensität zuzuordnen, gegebenfalls unter zusätzlicher Einbeziehung der Daten, die von Drehraten- und/oder Beschleunigungssensoren geliefert werden. Allgemein kann gesagt werden, dass zunächst Datensätze bestehend aus bestimmten magnetischen Eigenschaften und einer zugehörigen, beliebigen Konfiguration und/oder Bewegung aufgenommen werden und anschließend der Zusammenhang dieser Größen in einem sogenannten Training bestimmt wird. Es ist daher zu unterscheiden zwischen einem Lern- bzw. Trainingsmodus, in dem ausreichend Messdaten erfasst und zugeordnet werden müssen, um anschließend in einem Prädiktionsmodus eine zutreffende Zuordnung einer einzigen Magnetometermessung oder mehrerer Magnetometermessungen zu einer Konfiguration und/oder Bewegung und/oder deren Intensität zu ermöglichen.

Die erfindungsgemäße Mensch-Maschine Schnittstelle ist ferner mit einer Kommunikationseinheit zum Datenaustausch mit zumindest einem externen Gerät versehen, welches basierend auf den mit der Mensch-Maschine Schnittstelle ausgetauschten Daten eine Aktion ausführen kann, die der zumindest einen zugeordneten Konfiguration und/oder Bewegung und/oder deren Intensität entspricht. Beispielsweise kann eine erfindungsgemäße Mensch-Maschine Schnittstelle in eine Smartwatch integriert sein, so dass Funktionen der Smartwatch unter Zuhilfenahme der erfindungsgemäßen Mensch-Maschine Schnittstelle ausgeführt werden können. Denkbar wäre beispielsweise, dass bestimmte Finger- und/oder Handbewegungen bestimmten Funktionen und/oder Steuerbefehlen einer Smartwatch zugeordnet werden, so dass die Smartwatch durch Ausführen dieser Bewegungen einfach und intuitiv bedient werden kann.

Die vorliegende Erfindung ist auch auf ein Verfahren zum Erfassen einer Verformung der Oberfläche eines Hautareals eines menschlichen oder tierischen Körpers und Zuordnen der erfassten Verformung zu einer Konfiguration und/oder Bewegung und/oder Kraft, mit der die Bewegung ausgeführt wird, gerichtet, das die im Anspruch 8 genannten Schritte aufweist.

Wie zuvor schon erläutert, kann die Verformung der Oberfläche des Hautareals auf einer unwillkürlichen oder willkürlichen Muskel-, Sehnen-, Band-, Knochen- und/oder Organbewegung basieren.

Wie bereits zuvor im Zusammenhang mit der erfindungsgemäßen Mensch-Maschine Schnittstelle erläutert, handelt es sich bei dem Zuordnungsalgorithmus um eine trainierte künstliche Intelligenz, die den Zusammenhang zwischen magnetischen Signaturen und zugehörigen Konfigurationen und/oder Bewegungen und/oder deren Intensität auf der Grundlage eines Datensatzes bestehend aus wenigstens einer magnetischen Signatur und der zugehörigen Konfiguration und/oder Bewegung und/oder deren Intensität bestimmt oder erlernt hat. Als Zuordnungsalgorithmus können dabei vorzugsweise diejenigen Algorithmen verwendet werden, die oben im Zusammenhang mit der Mensch-Maschine Schnittstelle bereits genannt worden sind.

Unter dem Begriff "magnetische Signatur des Arrays aus Magneten" wird die Gesamtheit der zu messenden bzw. der gemessenen Änderungen der magnetischen Eigenschaften des Magnet-Arrays verstanden, die sich durch eine stattgefundene Verformung der Oberfläche eines interessierenden Hautareals ergeben. Als Referenz kann dabei eine andere magnetische Signatur dienen, die einen Ausgangszustand vor Eintritt einer Hautverformung beschreibt. Insbesondere kann anhand einer vorgegebenen Referenzkonfiguration vor Beginn einer Erfassung einer Änderung der magnetischen Signatur eine Signalkonditionierung oder -initialisierung vorgenommen werden. Beispielsweise können für eine solche Referenzkonfiguration alle Messsignale genullt werden und Änderungen der magnetischen Signatur ausgehend von dieser Referenzkonfiguration gemessen werden. Gemäß einem Ausführungsbeispiel setzt sich jede magnetische Signatur aus gemessenen magnetischen Feldstärken und/oder gemessenen magnetischen Flussdichten des Magnet-Arrays zusammen.

Bei der vorliegenden Erfindung stellen somit die aus einer Hautverformung oder Hautverformungen resultierenden, gemessenen Änderungen der magnetischen Eigenschaften der magnetischen Schicht bzw. des Magnet-Arrays das Nutzsignal dar. Andere Änderungen, die beispielsweise durch Störgrößen wie das Erdmagnetfeld oder magnetische Gegenstände hervorgerufen werden können, müssen gegebenenfalls aus dem gemessenen Signal herausgefiltert werden. Befinden sich beispielsweise magnetische Bauteile in der Mensch-Maschine-Schnittstelle, so können diese mittels einer sogenannten Hard-Soft-Iron Kalibrierung dauerhaft kompensiert werden, d.h. eine solche Kalibrierung muss für eine gegebene Mensch-Maschine-Schnittstelle nur einmal durchgeführt werden. Auch das Erdmagnetfeld an einem Anwendungsort der Mensch-Maschine-Schnittstelle kann mittels einer solchen Hard-Soft-Iron Kalibrierung dauerhaft kompensiert werden. Zur Kompensation anderer externer Störquellen können ein oder mehrere Magnetometer der Mensch-Maschine-Schnittstelle so angeordnet sein, dass sie nur das Magnetfeld der Störquelle(n) messen. Auf diese Weise kann dann eine Störgrößenkompensation bei denjenigen Magnetometern stattfinden, die zur Ermittlung der aus einer Hautverformung resultierenden Änderungen der magnetischen Eigenschaften der magnetischen Schicht bzw. des Magnet-Arrays herangezogen werden.

Wie zuvor im Zusammenhang mit der Mensch-Maschine Schnittstelle bereits erläutert werden die zu messenden magnetischen Feldstärken und/oder zu messenden magnetischen Flussdichten vorteilhaft mittels mehrerer Magnetometer erfasst, die vorzugsweise in Form eines Arrays angeordnet sind (das jedoch nicht dem Array zu entsprechen braucht, in dem die Magneten angeordnet sind). Dabei werden die zu messenden magnetischen Feldstärken und/oder zu messenden magnetischen Flussdichten vorzugsweise in x- und/oder y- und/oder z-Richtung erfasst. Bei bevorzugten Ausführungsbeispielen des erfindungsgemäßen Verfahrens und der erfindungsgemäßen Mensch-Maschine Schnittstelle findet eine Erfassung der genannten Größen in x-, y- und z-Richtung statt.

Zusätzlich zur Ermittlung von magnetischen Signaturen können Ausführungsformen des erfindungsgemäßen Verfahrens den Schritt des Ermittelns von Beschleunigungen und/oder Drehraten umfassen.

Wie bereits angesprochen, enthält das erfindungsgemäße Verfahren optional den Schritt des Zuweisens eines Steuerbefehls zu einer zugeordneten Konfiguration und/oder Bewegung und/oder deren Intensität, sowie den Schritt des Übertragens des Steuerbefehls an ein Gerät. Dieses Gerät kann mit einer erfindungsgemäßen Mensch-Maschine Schnittstelle eine Einheit bilden oder kann sich entfernt von der Mensch-Maschine Schnittstelle befinden. Die Übertragung des Steuerbefehls an das Gerät kann drahtgebunden oder drahtlos erfolgen und beispielsweise die Nutzung des Internets beinhalten.

Ausführungsbeispiele einer erfindungsgemäßen Mensch-Maschine Schnittstelle und des erfindungsgemäßen Verfahrens werden im Folgenden anhand der beigefügten, schematischen Zeichnungen näher erläutert. Es zeigt:
- Fig. 1: eine räumliche Ansicht eines Ausführungsbeispiels einer Mensch-Maschine-Schnittstelle von schräg oben, und
- Fig. 2: eine Seitenansicht der Mensch-Maschine-Schnittstelle aus Fig. 1.

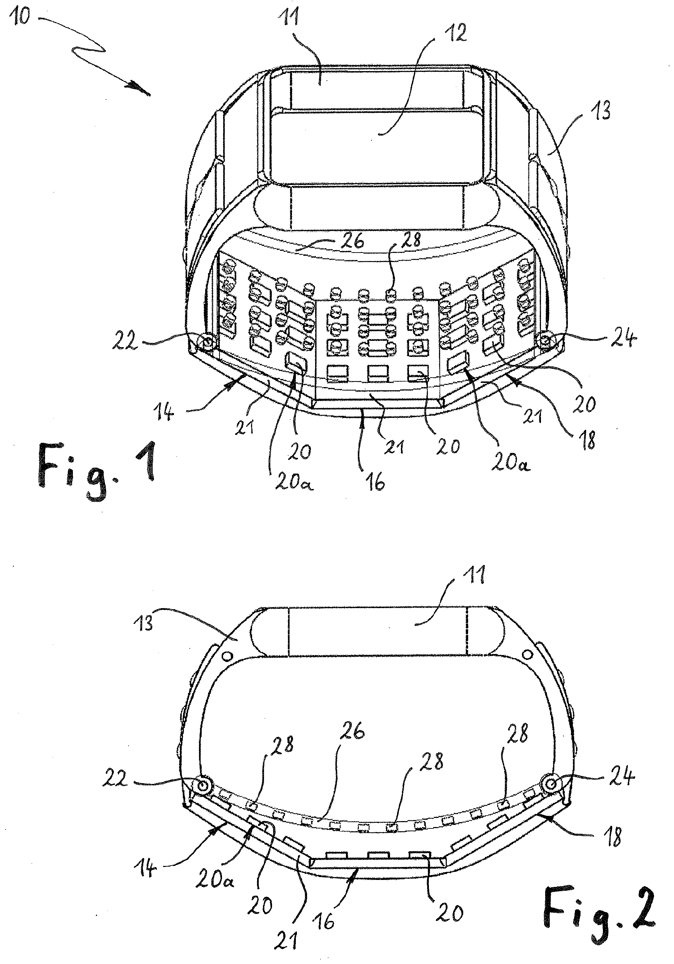

Die Figuren 1 und 2 zeigen schematisch eine allgemein mit 10 bezeichnete Mensch-Maschine Schnittstelle, die zur Ausführung eines im Folgenden noch genauer beschriebenen Ausführungsbeispiels eines erfindungsgemäßen Verfahrens verwendet wurde. Im gezeigten Ausführungsbeispiel ähnelt die Mensch-Maschine Schnittstelle 10 einer Smartwatch und hat oben einen rahmenförmiges Gehäuse 11, das eine hier rechteckige, leere Ausnehmung 12 umschließt, die zur Aufnahme eines Smartwatchmoduls (nicht gezeigt) oder allgemein eines Mikrocontrollers und/oder Mikroprozessors (nicht gezeigt) dient. Mittels eines bandförmigen Tragelements 13 lässt sich die Mensch-Maschine Schnittstelle 10 am Handgelenk eines Benutzers befestigen. Das Tragelement 13 ist nach Art eines Bandes für eine Armbanduhr verstellbar, um sich unterschiedlichen Handgelenksdurchmessern anpassen zu können.

Im unteren Bereich weist das Tragelement 13 drei gelenkig miteinander verbundene Segmente 14, 16 und 18 auf, die zur Aufnahme jeweils eines 3x3 Arrays aus Magnetometern 20 dienen. Jedes Magnetometer 20 enthält in diesem Ausführungsbeispiel drei nicht-kollineare Hall-Effektsensoren und kann somit die magnetische Flussdichte in x-, y- und z-Richtungen messen. Jedes 3x3 Magnetometer-Array ist hier als gedruckte Leiterplatte 21 mit jeweils 3x3 Sensorchips 20a ausgeführt, in denen die Magnetometer 20 angeordnet sind. Jeder Sensorchip 20a enthält neben einem Magnetometer 20 noch einen Beschleunigungssensor sowie einen Drehratensensor und würde somit eine 9-Achsenmessung ermöglichen. Vorliegend wurde jedoch nur die Magnetometerfunktion jedes Sensorchips 20a verwendet. Sensorchips der genannten Art und Ausführung sind kommerziell verfügbar. Statt der hier verwendeten, kommerziell verfügbaren Sensorchips könnten auch reine Magnetometer verwendet werden, wodurch das Magnetometer-Array kleiner ausgeführt werden könnte oder bei gleicher Größe mehr Magnetometermessungen erhalten werden können.

Die Magnetometer 20 sind auf der inneren Seite des Tragelements 13 angeordnet und somit der Hautoberfläche eines Handgelenks zugewandt, an der die Mensch-Maschine Schnittstelle 10 befestigt ist.

Mittels zweier gelenkiger Verbindungselemente 22, 24 ist am Tragelement 13 in den Figuren oberhalb der die Magnetometer 20 tragenden drei Segmente 14, 16 und 18 eine aus Silikonkautschuk bestehende, bandförmige flexible Schicht 26 angebracht, in die ein Array aus 4x12 Magneten 28 eingebettet ist. Der im hier beschriebenen Ausführungsbeispiel verwendete Silikonkautschuk ist durchsichtig. Die flexible Schicht 26 mit den darin eingebetteten Magneten 28 liegt hautkonform an der Unterseite des Handgelenks eines Benutzers an. Die Magnetometer 20 und die Magnete 28 sind nicht durch ein physikalisches Medium gekoppelt, wie es beispielsweise bei Kraft- oder Drucksensoren notwendig ist. Die flexible Schicht 26 aus Silikonkautschuk ist hochelastisch, um Hystereseerscheinungen zu minimieren, dabei jedoch nachgiebig genug, um auch kleinen Hautverformungen folgen zu können.

Bei den hier verwendeten Magneten 28 handelt es sich um Neodymium-Permanentmagneten aus NdFeB in Scheibenform mit einem Durchmesser von 1,5mm und einer Höhe von 0,5mm. Die Magnetisierung betrug N50, die Magnetisierungsrichtung verlief axial, d. h. parallel zur Höhe. Der Nordpol jedes Magneten 28 war hautseitig angeordnet, der Südpol jedes Magneten 28 folglich den Magnetometern 20 zugewandt. Die Abstände zwischen den Magneten 28 betrugen jeweils 5mm.

Die drei gelenkig angeordneten Segmente 14, 16 und 18, von denen jedes hier Abmessungen von ca. 22mm (Breite) x 29mm (Länge) aufweist, mit den darauf angeordneten Magnetometern 20 bilden zusammen mit hier nicht dargestellten Multiplexern (die Verwendung von Multiplexern ist optional und dient lediglich dazu, über wenige Datenleitungen mit vielen Sensoren kommunizieren zu können) sowie dem bereits erwähnten, hier jedoch nicht gezeigten Mikrocontroller die Erfassungseinheit der Mensch-Maschine Schnittstelle 10. Als Mikrocontroller kann beispielsweise ein bereits in einer Smartwatch oder einem anderen elektronischen Gerät vorhandener Mikrocontroller oder ein Mikroprozessor verwendet werden.

Vom Mikrocontroller werden die erfassten Magnetometermessungen einer hier nicht dargestellten Verarbeitungseinheit zugeführt, die mittels des in ihr implementierten CNN eine Zuordnung einer gemessenen magnetischen Signatur zu einer Konfiguration und/oder Bewegung und/oder deren Intensität ausführen kann. Diese Verarbeitungseinheit kann beispielsweise in eine Smartwatch integriert sein und wäre dann integraler Bestandteil der Mensch-Maschine Schnittstelle 10, sie kann sich jedoch auch entfernt von der Mensch-Maschine Schnittstelle befinden und beispielsweise drahtlos mit der in den Figuren gezeigten Anordnung kommunizieren.

Das nunmehr beschriebene Ausführungsbeispiel eines erfindungsgemäßen Verfahrens erlaubt die Zuordnung von Magnetometermessungen zu beispielsweise einer Vielzahl frei definierbarer Hand-/Fingerkonfigurationen im Rahmen einer Gestenerkennung mittels der zuvor beschriebenen Mensch-Maschine Schnittstelle 10. Die Mensch-Maschine Schnittstelle 10 wurde wie eine Armbanduhr am linken Handgelenk eines Benutzers befestigt und es wurden dann mit dieser Mensch-Maschine Schnittstelle 10 magnetische Signaturen gemessen, die bestimmten Hand-/Fingerkonfigurationen zugehörig sind. Als Referenzkonfiguration diente die flach ausgestreckte Hand des Benutzers.

Die verwendete Mensch-Maschine Schnittstelle 10 enthielt als flexible Schicht 26 mit magnetischen Eigenschaften eine Silikonschicht, in die ein Array aus 4x12 Magneten 28 eingebettet war. Die relativen Abstände zwischen den Magneten 28 betrugen 5mm.

Zur Messung der magnetischen Signatur dieses Magnet-Arrays wurde ein Magnetometer-Array verwendet, welches 9x3 Magnetometer 20 aufwies und in drei Subarrays á 3x3 Magnetometer unterteilt war.

Um die von der Mensch-Maschine Schnittstelle 10 gelieferten Magnetometermessungen den Konfigurationen der einzelnen Finger der linken Hand zuzuordnen wurde hier ein sogenanntes Convolutional Neural Network (CNN) genutzt, welches ein Ausführungsbeispiel eines künstlichen neuronalen Netzes darstellt. Jedes Magnetometer 20 erfasste das auf es wirkende Magnetfeld in x-, y- und z-Richtung. Es mussten somit pro Messschritt 81 Messwerte verarbeitet werden oder, anders ausgedrückt, jede magnetische Signatur bestand aus 81 Einzelwerten. Auf der Grundlage vieler solcher Messungen kann das CNN im Prädiktionsmodus aus den Magnetometermessungen die jeweilige Klasse vorhersagen. Eine solche Klasse entspricht hier einer diskreten Geste, wobei jede Geste eine unterschiedliche magnetische Signatur haben sollte. Im hier beschriebenen Fall wurde das Zuordnungsproblem deshalb als ein Mehrklassen-Klassifizierungsproblem formuliert.

Die Verwendung eines CNNs stellt keine Bedingung für das erfindungsgemäße Verfahren dar. Alternativ können beispielsweise auch Support Vector Machines, Random Tree Forests oder weitere oben bereits erwähnte Verfahren bzw. Algorithmen zur Anwendung kommen. Jedoch erschien die Verwendung eines CNN vorteilhaft, weil dessen Nutzung sehr gute Ergebnisse liefert und ein CNN zudem sehr gut auf größere Datenmengen skalierbar ist. Ferner ermöglicht die Verwendung eines CNN eine besonders kompakte Repräsentation zu lernender Parameter, was hinsichtlich einer Klassifikationsgenauigkeit und ressourcentechnischer Effizienz vorteilhaft insbesondere bei einer angedachten Verwendung für mobile Applikationen und IoT (Internet of Things)-Applikationen ist. Zudem sind CNNs robust gegenüber Translations-, Rotations-, Skalen- und Intensitätsvarianzen, so dass einerseits ein großer Datenpool zum Optimieren der freien Parameter zur Steigerung der Effektivität eines CNN generiert werden kann und andererseits eine Verallgemeinerung erlernter Zusammenhänge zwischen einer Hautverformung und einer zugehörigen Konfiguration leichter auf eine Vielzahl von Nutzern und deren individuelle Charakteristika übertragen werden können.

Bei einem CNN handelt es sich allgemein um einen der künstlichen Intelligenz zugehörigen Algorithmus und genauer um überwachtes Lernen mittels künstlicher neuronaler Netze. Als Eingang des CNN dienen die Magnetometermessungen, wohingegen als Ausgang des CNN eine zugehörige, beliebige Geste aufgenommen bzw. definiert wird. Datensätze bestehend aus den Magnetometermessungen (Eingang des CNN) und einer zugehörigen, beliebigen Geste (Ausgang des CNN) werden aufgenommen bzw. erstellt, und anschließend wird der Zusammenhang dieser Größen durch Optimieren der freien Parameter des CNN im sogenannten Training bestimmt.

Im beschriebenen Ausführungsbeispiel besteht ein einzelnes Trainingsbeispiel aus einer qualitativen Konfiguration der Hand, d. h. einer eindeutigen Klasse kodiert als ein sogenannter One-Hot-Vector, und der Gesamtheit der unter Einhaltung der qualitativen Konfiguration der Hand erfassten Magnetometermessungen in den x-, y-, und z-Richtungen.

Aufgrund der Anordnung der Magnetometer 20 als 3x9 Array in der verwendeten Mensch-Maschine Schnittstelle 10 entstehen bei einer Messung jeweils 27 Stützpunkte zur Messung der magnetischen Signatur in x-, y- und z-Richtung. Die aus den einzelnen Magnetometermessungen gewonnene, aus der Hautverformung resultierende magnetische Signatur der flexiblen Schicht 26 lässt sich demnach als topologische Vermessung der Hautverformung mit den 27 Stützpunkten als eine Matrix zur Verarbeitung in dem CNN zusammenfassen. Das Trainingsbeispiel wird, wie oben bereits erwähnt, durch ein jeweiliges Label komplettiert, welches die zugehörige Klasse, d.h. die zugehörige Konfiguration angibt.

Somit setzt sich im beschriebenen Ausführungsbeispiel ein Trainingsdatensatz zusammen aus einer Matrix X der Dimension
(m, nC, nH, nW) mit m der Anzahl der Trainingsbeispiele, nH der Anzahl der Magnetometer in y-Richtung (Höhe des Magnetometerarrays), nW der Anzahl der Magnetometer in x-Richtung (Breite des Magnetometerarrays), nC der Anzahl der Kanäle (x-, y-, z-Richtungen)
   und einer Matrix Y der Dimension
(m, nG) mit m der Anzahl der Trainingsbeispiele und nG der Anzahl der Gesten.

Jeder der 81 Messwerte einer magnetischen Signatur wurde jeweils mittels seiner aus der Matrix X ermittelten arithmetischen Mittelwerte und Standardabweichungen standardisiert (sogenannte Z-Score-Standardisierung oder Z-Transformation). Diese im Trainingsmodus aus den Messwerten ermittelten arithmetischen Mittelwerte und Standardabweichungen können zudem später, d.h. nach dem abgeschlossenen Training, im Prädiktionsmodus zur Signalkonditionierung neuer Messungen magnetischer Signaturen zur Standardisierung verwendet werden.

Im Rahmen der experimentellen Erprobung wurden zum Trainieren des CNN zunächst m=18.000 Trainingsbeispiele (die einen Trainingsdatensatz bildeten), 3.375 Testbeispiele (die einen Testdatensatz bildeten), 1.125 Validierungsbeispiele (die einen Validierungsdatensatz bildeten) und nG=6 Gesten untersucht. Das CNN wurde lediglich mit dem Trainingsdatensatz trainiert. Die Auswertung des Testdatensatzes diente der Evaluierung und der Feinjustierung des CNN, um eine optimale Performanz hinsichtlich der Prädiktionsgenauigkeit und der Verallgemeinerungsfähigkeit des CNN zu erreichen. Ein Validierungsdatensatz wird ganz zum Schluss zur finalen Evaluierung herangezogen, um damit sicherzustellen, dass das CNN tatsächlich ihm bisher unbekannte Datensätze sicher klassifizieren, d. h. zuordnen kann.

Das Training des CNN besteht aus der sogenannten Forward Propagation und der Backward Propagation. Die Forward Propagation beschreibt den Vorwärtszweig der Berechnung, d. h. die Vorhersage der Klasse anhand der Magnetometermessungen und der momentanen Parameter des CNN. Mithilfe einer Kostenfunktion werden dann in der Backward Propagation, d. h. im Rückwärtszweig, die freien Parameter des CNN so verändert, dass der Wert der Kostenfunktion kleiner und insbesondere minimiert wird. Die Kostenfunktion wurde beim hier beschriebenen Ausführungsbeispiel als sogenannte kategorische Kreuzentropie formuliert (engl. Categorical Cross-Entropy loss). Die Backward Propagation ist demnach ein Optimierungsverfahren zur Bestimmung der freien Parameter des CNN. Das verwendete CNN wurde in 50 Epochen mit einer Batchsize 16 trainiert, was bedeutet, dass der gesamte Trainingsdatensatz 50 Mal an das CNN zur Optimierung gegeben wurde, wobei aus Gründen der numerischen Stabilität immer 16 Trainingsdatensätze gleichzeitig in das CNN eingespeist wurden. Verwendet wurde das Adadelta-Optimierungsverfahren mit folgenden Parametern: initiale, adaptive Lernrate IR= 1,0, Adadelta-Abklingfaktor rho=0,95, Fuzzfaktor epsilon=1e-07, initialer Lernratenabklingfaktor decay=0,0.

Die Architektur des verwendeten CNN ist in der folgenden Tabelle 1 wiedergegeben.

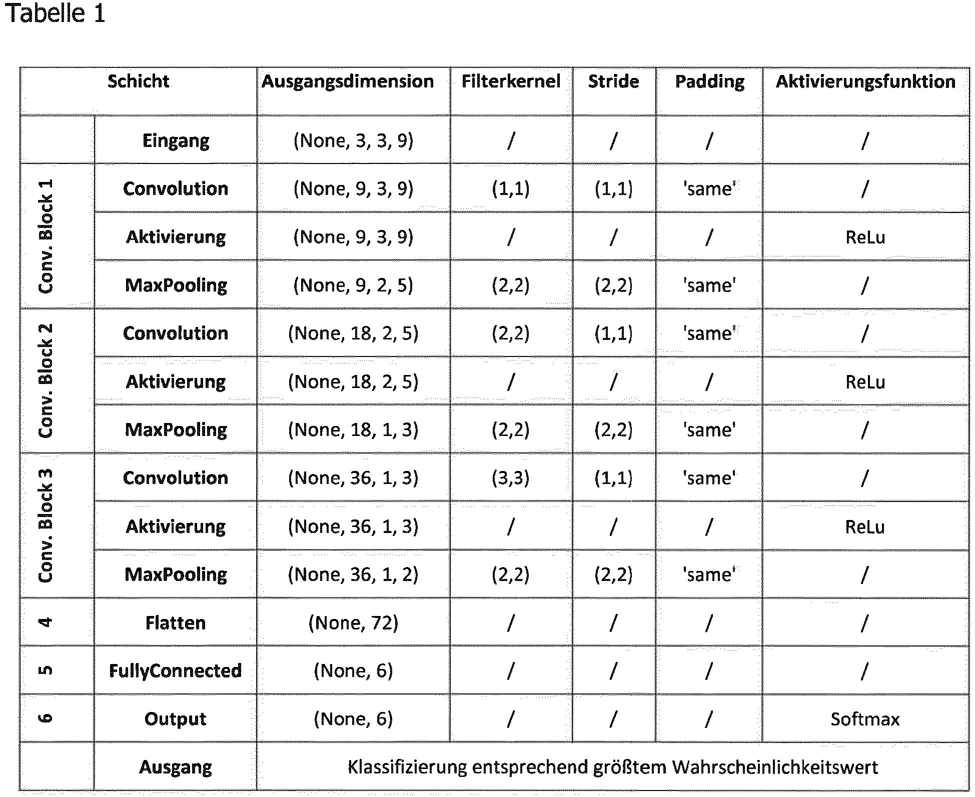

Dabei wurden die Filterkernel der Convolution- und der FullyConnected-Schichten über das Glorot Uniform (Xavier) Verfahren initialisiert. Ferner wurden die Filterkernel der Convolution-Schichten mit einem Gewichtungsfaktor von 0,001 L2-Norm regularisiert. Schließlich enthalten die Filterkernel der Convolution-Schichten Biases, welche zu NULL initialisiert wurden.

Im Ergebnis wurden die Magnetometermessungen mit folgenden Genauigkeiten in die richtige Klasse klassifiziert: Training 99,34%, Test 99,53%, Validierung 99,29%.

Im Prädiktionsmodus eines solchermaßen trainierten CNN reicht mit dem beschriebenen Ausführungsbeispiel des Verfahrens dann ein einziger Messschritt aller Magnetometer der Mensch-Maschine Schnittstelle zur Identifizierung einer statischen Geste aus. Jedoch können nicht nur statische Zustände, sondern auch zeitliche Änderungen der magnetischen Signatur gemessen werden, wozu dann mehrere Messschritte erforderlich sind. Zu deren Auswertung können sogenannte Recurrent Neural Nets (LSTMs [Long-Short-Term-Memory] oder GNNs [Gated Neural Network]) zum Einsatz kommen, um Gesten zu klassifizieren oder kontinuierliche Fingerbewegungen zu identifizieren.

Die tragbare Mensch-Maschine Schnittstelle 10 wird wie eine Armbanduhr angelegt, so dass die Sensormodule der Erfassungseinheit Hautverformungen am Handgelenk über eine Änderung der magnetischen Flussdichte registrieren. Genauer gesagt wird durch das Vollziehen von Hand- und Fingerbewegungen die Haut durch Muskel-, Band-, Sehnen- und Knochenbewegungen verformt. Die flexible Schicht 26 mit den eingebetteten Magneten 28 folgt dieser Verformung, so dass Relativverschiebungen und Verdrehungen der Magnete 28 bezüglich der Magnetometer 20 auftreten. Diese relativen Änderungen in der magnetischen Flussdichte infolge der Hand- und Fingerbewegungen können somit aus den Magnetometermessungen rekonstruiert werden. Die Trainingsphase ist üblicherweise rechenintensiver und wird vorteilhaft auf einem leistungsfähigen Computer oder einer für künstliche neuronale Netze optimierten Verarbeitungseinheit ausgeführt.

Ein trainiertes CNN kann jedoch auf sehr recheneffiziente Weise eine Prädiktion ausführen. Aufgrund der aus der Trainingsphase stammenden vielen Datensätze wird nicht nur eine hohe Genauigkeit der Vorhersage erreicht, sondern auch eine hohe Robustheit derselben. Da der Prädiktionsmodus neben Verfahren zur Signalkonditionierung nur die sogenannte Forward Propagation enthält, ist die Prädiktion im Vergleich zum Training extrem recheneffizient und kann deshalb beispielsweise auch auf Smartphones und ähnlichen mobilen Geräten ausgeführt werden. Im konkret beschriebenen Beispiel können in Abhängigkeit der Sampling-Frequenz Gesten extrem schnell mittels der 81 Magnetometermessungen identifiziert werden, indem diese Messungen in einem einzigen Schritt durch das mittels Training optimierte CNN gesandt werden. Ein der identifizierten Geste zugeordnetes Steuersignal kann dann von der Verarbeitungseinheit oder einer nachgelagerten Steuereinheit unmittelbar an das zu steuernde Gerät gesandt werden.

## Patentansprüche

1. Tragbare Mensch-Maschine Schnittstelle (10), mit:
einem Tragelement (13), welches zur Anbringung an einem Hautareal einer Extremität eines menschlichen oder tierischen Körpers ausgebildet ist,
einer flexiblen Schicht (26) mit magnetischen Eigenschaften, die an dem Tragelement (13) auf einer dem Hautareal des menschlichen oder tierischen Körpers zugewandten Seite zum Inkontaktkommen mit der Oberfläche des Hautareals angebracht ist, wobei die Flexibilität der Schicht (26) mit magnetischen Eigenschaften solchermaßen ist, dass die Schicht (26) Verformungen der Oberfläche des Hautareals zumindest im Wesentlichen folgen kann, und wobei die magnetischen Eigenschaften der Schicht (26) derart ausgebildet sind, dass von der flexiblen Schicht (26) ein Magnetfeld erzeugt wird, und eine Verformung der Oberfläche des Hautareals zu einer messbaren Änderung der magnetischen Feldstärke und/oder einer messbaren Änderung der magnetischen Flussdichte des erzeugten Magnetfeldes führt,
einer an dem Tragelement (13) angebrachten Erfassungseinheit, die die Änderung der magnetischen Feldstärke und/oder die Änderung der magnetischen Flussdichte misst,
einer integrierten oder ausgelagerten Verarbeitungseinheit, die dazu eingerichtet ist, einen Algorithmus auszuführen, der die gemessene Änderung der magnetischen Feldstärke und/oder die gemessene Änderung der magnetischen Flussdichte unter Zuhilfenahme von Bayes-Klassifikatoren, eines künstlichen neuronalen Netzes, einer Support Vector Machine, einer Finite State Machine, eines Hidden Markov Modells, einer Relevance Vector Machine, eines Dynamic Time Warping Verfahrens, eines Conditional Random Field Verfahrens, eines Entscheidungsbaums, eines Random Forest Verfahrens, eines k-nearest Neighbors Algorithmus, einer Diskriminanzanalyse, einer linearen Regression, einer logistischen Regression, eines Gauß-Prozesses, eines Perceptrons und/oder von Ensemble-Methoden, wie z.B. Bayes Optimal Classifier, Bagging, Boosting, einer Konfiguration und/oder einer Bewegung und/oder einer Kraft, mit der die Bewegung ausgeführt wird, zuordnet, wobei eine Konfiguration eine bestimmte Stellung der menschlichen oder tierischen Extremität und eine Bewegung eine zeitliche Änderung einer Konfiguration ist, und
einer Kommunikationseinheit zum Datenaustausch mit zumindest einem externen Gerät, welches basierend auf den mit der Mensch-Maschine Schnittstelle (10) ausgetauschten Daten eine Aktion ausführen kann, die der zumindest einen zugeordneten Konfiguration und/oder Bewegung und/oder Kraft, mit der die Bewegung ausgeführt wird, entspricht.

2. Mensch-Maschine Schnittstelle nach Anspruch 1,
**dadurch gekennzeichnet, dass** die flexible Schicht (26) eine Mehrzahl Magnete (28) enthält, die vorzugsweise in Form eines Arrays angeordnet sind.

3. Mensch-Maschine Schnittstelle nach Anspruch 1 oder 2,
**dadurch gekennzeichnet, dass** das Tragelement (13) und die flexible Schicht (26) mit magnetischen Eigenschaften in einem Bauteil kombiniert sind.

4. Mensch-Maschine Schnittstelle nach einem der Ansprüche 1 bis 3,
**dadurch gekennzeichnet, dass** die Erfassungseinheit mehrere Magnetometer (20) enthält.

5. Mensch-Maschine Schnittstelle nach einem der vorhergehenden Ansprüche, **dadurch gekennzeichnet, dass** eine Verformung der Oberfläche des Hautareals auf einer unwillkürlichen oder willkürlichen Muskel-, Sehnen-, Band-, Knochen- und/oder Organbewegung basiert.

6. Mensch-Maschine Schnittstelle nach einem der vorhergehenden Ansprüche, **dadurch gekennzeichnet, dass** ferner ein oder mehrere Beschleunigungssensoren und/oder Drehratensensoren an der Mensch-Maschine Schnittstelle (10) vorhanden sind, deren Ausgangssignale der Verarbeitungseinheit zugeführt werden.

7. Mensch-Maschine Schnittstelle nach einem der vorhergehenden Ansprüche, **dadurch gekennzeichnet, dass** sie in eine Smartwatch integriert ist.

8. Verfahren zum Erfassen einer Verformung der Oberfläche eines Hautareals einer Extremität eines menschlichen oder tierischen Körpers mittels einer tragbaren Mensch-Maschine Schnittstelle (10) mit einem Tragelement (13), welches zur Anbringung an dem Hautareal der Extremität des menschlichen oder tierischen Körpers ausgebildet ist, und Zuordnen der erfassten Verformung zu einer Konfiguration und/oder einer Bewegung und/oder einer Kraft, mit der die Bewegung ausgeführt wird, wobei eine Konfiguration eine bestimmte Stellung der menschlichen oder tierischen Extremität und eine Bewegung eine zeitliche Änderung einer Konfiguration ist, mit den Schritten:
- Anordnen eines Arrays aus Magneten (28) in Gestalt einer flexiblen Schicht (26) an dem Tragelement (13) auf einer dem Hautareal zugewandten Seite zum Inkontaktkommen mit der Oberfläche des Hautareals derart, dass das Array der Verformung der Oberfläche des Hautareals folgt,
- Ermitteln zumindest einer magnetischen Signatur des Arrays aus Magneten (28) durch Messen einer aufgrund der Verformung der Oberfläche des Hautareals stattgefundenen, messbaren Änderung der magnetischen Feldstärke und/oder messbaren Änderung der magnetischen Flussdichte eines vom Array aus Magneten (28) erzeugten Magnetfeldes mittels einer an dem Tragelement (13) angebrachten Erfassungseinheit,
- Ausführen eines Algorithmus zum Zuordnen der ermittelten zumindest einen magnetischen Signatur zu einer Konfiguration und/oder einer Bewegung und/oder einer Kraft, mit der die Bewegung ausgeführt wird, wobei der Algorithmus eine trainierte Künstliche Intelligenz ist, die den Zusammenhang zwischen magnetischen Signaturen und zugehörigen Konfigurationen und/oder Bewegungen und/oder Kraft, mit der die Bewegungen ausgeführt werden, auf der Grundlage eines Datensatzes bestehend aus zumindest einer magnetischen Signatur und der zugehörigen Konfiguration und/oder Bewegung und/oder Kraft, mit der die Bewegung ausgeführt wird, bestimmt oder erlernt hat, und wobei magnetische Signaturen unter Zuhilfenahme von Bayes-Klassifikatoren, eines künstlichen neuronalen Netzes, einer Support Vector Machine, einer Finite State Machine, eines Hidden Markov Modells, einer Relevance Vector Machine, eines Dynamic Time Warping Verfahrens, eines Conditional Random Field Verfahrens, eines Entscheidungsbaums, eines Random Forest Verfahrens, eines k-nearest Neighbors Algorithmus, einer Diskriminanzanalyse, einer linearen Regression, einer logistischen Regression, eines Gauß-Prozesses, eines Perceptrons und/oder von Ensemble-Methoden, wie z.B. Bayes Optimal Classifier, Bagging, Boosting, einer Konfiguration und/oder Bewegung und/oder Kraft, mit der die Bewegung ausgeführt wird, zugeordnet werden,
- Zuweisen eines Steuerbefehls zu der zugeordneten Konfiguration und/oder Bewegung und/oder Kraft, mit der die Bewegung ausgeführt wird,
- Übertragen des Steuerbefehls an ein Gerät, und
- Ausführen einer dem Steuerbefehl entsprechenden Aktion durch das Gerät.

9. Verfahren nach Anspruch 8,
**dadurch gekennzeichnet, dass** jede magnetische Signatur sich aus gemessenen magnetischen Feldstärken und/oder gemessenen magnetischen Flussdichten zusammensetzt.

10. Verfahren nach einem der Ansprüche 8 oder 9,
**dadurch gekennzeichnet, dass** vor einem Messen der aufgrund einer Hautverformung stattfindenden, messbaren Änderung der magnetischen Feldstärke und/oder messbaren Änderung der magnetischen Flussdichte eine Signalinitialisierung basierend auf einer vorbestimmten Referenzkonfiguration erfolgt.

11. Verfahren nach Anspruch 9 oder 10,
**dadurch gekennzeichnet, dass** die zu messenden magnetischen Feldstärken und/oder zu messenden magnetischen Flussdichten mittels mehrerer Magnetometer erfasst werden, die vorzugsweise in Form eines Arrays angeordnet sind.

12. Verfahren nach Anspruch 11,
**dadurch gekennzeichnet, dass** die zu messenden magnetischen Feldstärken und/oder zu messenden magnetischen Flussdichten in x- und/oder y- und/oder z-Richtung erfasst werden.

13. Verfahren nach Anspruch 10 in Verbindung mit Anspruch 12,
**dadurch gekennzeichnet, dass** zur Signalinitialisierung die Magnetometer basierend auf der vorbestimmten Referenzkonfiguration in jeder Erfassungsrichtung genullt werden.

14. Verfahren nach einem der Ansprüche 8 bis 13,
**dadurch gekennzeichnet, dass** die Verformung der Oberfläche des Hautareals auf einer unwillkürlichen oder willkürlichen Muskel-, Sehnen-, Band-, Knochen- und/oder Organbewegung basiert.

15. Verfahren nach einem der Ansprüche 8 bis 14,
ferner **gekennzeichnet durch** den Schritt des Ermittelns von Beschleunigungen und/oder Drehraten zusätzlich zur Ermittlung von magnetischen Signaturen.

## Claims

1. A wearable man-machine interface (10), comprising:
a support member (13) adapted for attachment to a skin area of an extremity of a human or animal body,
a flexible layer (26) having magnetic properties attached to the support member (13) on a side facing the skin area of the human or animal body for contacting the surface of the skin area, wherein the flexibility of the layer (26) having magnetic properties is such that the layer (26) is able to at least substantially follow deformations of the surface of the skin area, and wherein the magnetic properties of the layer (26) are such that a magnetic field is generated by the flexible layer (26) and a deformation of the surface of the skin area leads to a measurable change in the magnetic field strength and/or a measurable change in the magnetic flux density of the generated magnetic field,
a sensing unit attached to the support element (13) which measures the change in magnetic field strength and/or the change in magnetic flux density,
an integrated or separate processing unit arranged to execute an algorithm which allocates the measured change in magnetic field strength and/or the measured change in magnetic flux density to a configuration and/or movement and/or a force with which the movement is performed with the aid of Bayes classifiers, an artificial neural network, a support vector machine, a finite state machine, a Hidden Markov model, a relevance vector machine, a dynamic time warping method, a conditional random field method, a Decision Tree, a Random Forest Method, a k-nearest neighbors algorithm, a Discriminant Analysis, a Linear Regression, a Logistic Regression, a Gaussian Process, a Perceptron and/or Ensemble Methods, such as Bayes Optimal Classifier, bagging, boosting, wherein a configuration is a specific position of the human or animal limb and a movement is a temporal change of a configuration, and
a communication unit for data exchange with at least one external device which, based on the data exchanged with the man-machine interface (10), is able to perform an action corresponding to the at least one allocated configuration and/or movement and/or force with which the movement is performed.

2. Man-machine interface according to claim 1,
**characterised in that** the flexible layer (26) includes a plurality of magnets (28), which are preferably arranged in the form of an array.

3. Man-machine interface according to claim 1 or 2,
**characterized in that** the support element (13) and the flexible layer (26) with magnetic properties are combined in one component.

4. Man-machine interface according to any one of claims 1 to 3,
**characterised in that** the sensing unit comprises a plurality of magnetometers (20).

5. Man-machine interface according to any one of the preceding claims, **characterised in that** a deformation of the surface of the skin area is based on involuntary or voluntary muscle, tendon, ligament, bone and/or organ movement.

6. Man-machine interface according to any one of the preceding claims, **characterised in that** one or more accelerometers and/or rotation rate sensors are further provided on the man-machine interface (10), the output signals of which are supplied to the processing unit.

7. Man-machine interface according to any one of the preceding claims, **characterised in that** it is integrated in a smartwatch.

8. A method for detecting a deformation of the surface of a skin area of an extremity of a human or animal body by means of a wearable man-machine interface (10) including a support element (13) which is adapted for attachment to the skin area of the extremity of the human or animal body, and allocating the detected deformation to a configuration and/or a movement and/or a force with which the movement is performed, wherein a configuration is a specific position of the human or animal extremity and a movement is a temporal change of a configuration, the method comprising the steps:
- arranging an array of magnets (28) in the form of a flexible layer (26) on the support element (13) on a side facing the skin area to come into contact with the surface of the skin area such that the array follows the deformation of the surface of the skin area,
- determining at least one magnetic signature of the array of magnets (28) by measuring a measurable change in magnetic field strength and/or measurable change in magnetic flux density of a magnetic field generated by the array of magnets (28) due to the deformation of the surface of the skin area by means of a sensing unit attached to the support element (13),
- executing an algorithm for allocating the determined at least one magnetic signature to a configuration and/or a movement and/or a force with which the movement is executed, wherein the algorithm is a trained artificial intelligence which has determined or learned the relationship between magnetic signatures and associated configurations and/or movements and/or force with which the movements are executed on the basis of a data set consisting of at least one magnetic signature and the associated configuration and/or movement and/or force with which the movement is executed, and wherein magnetic signatures are allocated to a configuration and/or a movement and/or a force with which the movement is executed with the aid of Bayes classifiers, an artificial neural network, a support vector machine, a finite state machine, a hidden Markov model, a relevance vector machine, a dynamic time warping method, a conditional random field method, a Decision Tree, a Random Forest Method, a k-nearest neighbors Algorithm, a Discriminant Analysis, a Linear Regression, a Logistic Regression, a Gaussian Process, a Perceptron and/or Ensemble Methods such as Bayes Optimal Classifier, bagging, boosti ng,
- assigning a control command to the allocated configuration and/or movement and/or force with which the movement is executed,
- transmitting the control command to a device, and
- performing, by the device, an action corresponding to the control command.

9. Method according to claim 8,
**characterised in that** each magnetic signature is composed of measured magnetic field strengths and/or measured magnetic flux densities.

10. Method according to one of claims 8 or 9,
**characterised in that** prior to measuring the measurable change in magnetic field strength and/or measurable change in magnetic flux density occurring as a result of a skin deformation, a signal initialisation based on a predetermined reference configuration is carried out.

11. Method according to claim 9 or 10,
**characterised in that** the magnetic field strengths to be measured and/or magnetic flux densities to be measured are detected by means of a plurality of magnetometers, which are preferably arranged in the form of an array.

12. Method according to claim 11,
**characterized in that** the magnetic field strengths to be measured and/or magnetic flux densities to be measured are detected in x- and/or y- and/or z-direction.

13. Method according to claim 10 in conjunction with claim 12,
**characterised in that**, for signal initialisation, the magnetometers are zeroed in each detection direction based on the predetermined reference configuration.

14. Method according to any one of claims 8 to 13,
**characterised in that** the deformation of the surface of the skin area is based on involuntary or voluntary muscle, tendon, ligament, bone and/or organ movement.

15. Method according to any one of claims 8 to 14,
further **characterised by** the step of determining accelerations and/or rotation rates in addition to determining magnetic signatures.

## Revendications

1. Interface homme-machine (10) portable, comprenant:
un élément support (13) qui est conçu pour être placé sur un dermatome d'une extrémité d'un corps humain ou animal,
une couche souple (26) ayant des propriétés magnétiques, qui est appliquée sur l'élément support (13) sur un côté orienté vers le dermatome du corps humain ou animal afin qu'elle vienne en contact avec la surface du dermatome, dans laquelle la souplesse de la couche (26) ayant les propriétés magnétiques est telle que la couche (26) puisse suivre au moins sensiblement les déformations de la surface du dermatome, et dans laquelle les propriétés magnétiques de la couche (26) sont conçues de telle sorte qu'un champ magnétique soit généré par la couche souple (26) et qu'une déformation de la surface du dermatome provoque une modification mesurable de l'intensité du champ magnétique et/ou une modification mesurable de la densité de flux magnétique du champ magnétique généré,
une unité de détection montée sur l'élément support (13) qui mesure la modification de l'intensité du champ magnétique et/ou la modification de la densité du flux magnétique,
une unité de traitement intégrée ou externe qui est conçue pour exécuter un algorithme qui associe la modification mesurée de l'intensité du champ magnétique et/ou la modification de la densité de flux magnétique en faisant appel à des classificateurs de Bayes, à un réseau de neurones artificiels, à une machine à vecteurs de support, à un automate fini, à un modèle de Markov caché, à une machine à vecteurs de pertinence, à un procédé de formation temporelle dynamique, à un procédé de champ aléatoire conditionnel, à un arbre de décision, à un procédé de forêt aléatoire, à un algorithme des k plus proches voisins, à une analyse discriminatoire, à une régression linéaire, à une régression logistique, à un processus de Gauss, à un perceptron et/ou à des méthodes d'ensemble comme par exemple un classificateur optimal bayésien, au principe du bagging, au principe du boosting, à une configuration et/ou à un mouvement et/ou à une force, avec laquelle le déplacement est effectué, dans laquelle une configuration est une position déterminée de l'extrémité humaine ou animale et un mouvement est une modification temporelle d'une configuration, et
une unité de communication pour l'échange de données avec au moins un appareil externe qui en se basant sur les données échangées avec l'interface homme machine (10) peut réaliser une action qui correspond à l'au moins une configuration associée et/ou au mouvement et/ou à la force avec laquelle le mouvement est exécuté.

2. Interface homme-machine portable selon la revendication 1
**caractérisée en ce que** la couche souple (26) contient une pluralité d'aimants (28) qui sont disposés de préférence en forme d'un réseau.

3. Interface homme-machine portable selon la revendication 1 ou 2
**caractérisée en ce que** l'élément support (13) et la couche souple (26) ayant des propriétés magnétiques sont combinés dans un composant.

4. Interface homme-machine portable selon l'une quelconque des revendications 1 à 3
**caractérisée en ce que** l'unité de détection contient plusieurs magnétomètres (20).

5. Interface homme-machine portable selon l'une quelconque des revendications précédentes, **caractérisée en ce qu'**une déformation de la surface du dermatome se base sur un mouvement volontaire ou instinctif de muscle, de tendon, de ligament, d'os et/ou d'organe.

6. Interface homme-machine portable selon l'une quelconque des revendications précédentes, **caractérisée en ce que**, de plus, un ou plusieurs capteurs d'accélération et/ou capteurs de rotation sont présents sur l'interface homme-machine (10), dont les signaux de sortie sont acheminés à l'unité de traitement.

7. Interface homme-machine portable selon l'une quelconque des revendications précédentes, **caractérisée en ce qu'**elle est intégrée à une montre intelligente.

8. Procédé de détection d'une déformation de la surface d'un dermatome d'une extrémité d'un corps humain ou animal au moyen d'une interface homme-machine portable (10) comprenant un élément de support (13) qui est conçu pour être appliqué sur le dermatome de l'extrémité du corps humain ou animal, et pour associer la déformation détectée à une configuration et/ou à un mouvement et/ou à une force avec laquelle le mouvement est effectué, dans laquelle une configuration est une position déterminée de l'extrémité humaine ou animale et un mouvement est une modification temporelle d'une configuration, comprenant les étapes consistant à:
- disposer un réseau d'aimants (28) en forme d'une couche souple (26) sur l'élément support (13) sur un côté orienté vers le dermatome de manière à entrer en contact avec la surface du dermatome de manière à ce que le réseau suit la déformation de la surface du dermatome,
- déterminer au moins une signature magnétique du réseau d'aimants (28) par mesure d'une modification mesurable de l'intensité de champ magnétique et/ou de la modification mesurable de la densité de flux magnétique, due à la déformation de la surface du dermatome, d'un champ magnétique généré par le réseau d'aimants (28) au moyen d'une unité de détection montée sur l'élément support (13),
- exécuter un algorithme pour associer l'au moins une signature magnétique déterminée à une configuration et/ou à un mouvement et/ou à une force, avec laquelle le mouvement est effectué, l'algorithme étant une intelligence artificielle entraînée, qui a déterminé ou a entraîné la relation entre les signatures magnétiques et les configurations associées et/ou les mouvements et/ou la force avec laquelle les mouvements sont effectués, sur la base d'un jeu de données constitué d'au moins une signature magnétique et de la configuration associée et/ou du mouvement et/ou de la force avec laquelle le mouvement est effectué, et les signatures magnétiques faisant appel à des classificateurs de Bayes, à un réseau de neurones artificiels, à une machine à vecteurs de support, à un automate fini, à un modèle de Markov caché, à une machine à vecteurs de pertinence, à un procédé de formation temporelle dynamique, à un procédé de champ aléatoire conditionnel, à un arbre de décision, à un procédé de forêt aléatoire, à un algorithme des k plus proches voisins, à une analyse discriminatoire, à une régression linéaire, à une régression logistique, à un processus de Gauss, à un perceptron et/ou à des méthodes d'ensemble comme par exemple un classificateur optimal bayésien, au principe du bagging, au principe du boosting, étant associées à une configuration et/ou à un mouvement et/ou à une force, avec laquelle le déplacement est effectué,
- attribuer une instruction de commande à la configuration et/ou au mouvement et/ou à la force associé(e) avec laquelle le mouvement est effectué,
- transférer l'instruction de commande à un appareil, et
- exécuter une action correspondante à l'instruction de commande par le biais de l'appareil.

9. Procédé selon la revendication 8,
**caractérisé en ce que** chaque signature magnétique se compose d'intensités de champ magnétique mesurées et/ou de densités de flux magnétique mesurées.

10. Procédé selon l'une quelconque des revendications 8 ou 9
**caractérisé en ce que** avant une mesure de la modification mesurable ayant lieu en raison d'une déformation de la peau, de l'intensité de champ magnétique et/ou d'une modification mesurable de la densité de flux magnétique se produit une initialisation de signal sur la base d'une configuration de référence prédéterminée.

11. Procédé selon la revendication 9 ou 10,
**caractérisé en ce que** les intensités magnétiques à mesurer et/ou les densités de flux magnétiques à mesurer sont détectées au moyen de plusieurs magnétomètres, qui sont disposés de préférence sous la forme d'un réseau.

12. Procédé selon la revendication 11,
**caractérisé en ce que** les intensités de champ magnétique à mesurer et/ou les densités de flux magnétique à mesurer sont détectées dans une direction x et/ou y et/ou z.

13. Procédé selon la revendication 10 en association avec la revendication 12, **caractérisé en ce que** pour l'initialisation de signal les magnétomètres sont remis à zéro dans chaque direction de détection sur la base de la configuration de référence prédéterminée.

14. Procédé selon l'une quelconque des revendications 8 à 13,
**caractérisé en ce que** la déformation de la surface du dermatome se base sur un mouvement volontaire ou instinctif de muscle, de tendon, de ligament, d'os et/ou d'organe.

15. Procédé selon l'une quelconque des revendications 8 à 14,
en outre **caractérisé par** l'étape de la détermination d'accélérations et/ou de vitesses en plus de la détermination de signatures magnétiques.
